# EUROPÄISCHE PATENTSCHRIFT

(11) **EP 2 078 627 B1**
(45) Veröffentlichungstag und Bekanntmachung des Hinweises auf die Patenterteilung: **12.01.2011**
(21) Anmeldenummer: 08021491.9
(22) Anmeldetag: 11.12.2008
(51) Int. Cl.: B60C 27/06, B60C 27/10

(54) **Ringelement mit einer Halteeinrichtung für Kettenelemente**
Ring element with a holding device for chain elements
Elément annulaire doté d'un dispositif de retenue pour éléments de chaînes

(30) Priorität: 09.01.2008 DE 102008003627
(43) Veröffentlichungstag der Anmeldung: 15.07.2009
(73) Patentinhaber: Grizzly Snow Grip GmbH, 90461 Nürnberg (DE)
(72) Erfinder: Hollfelder, Alfred, 91301 Forchheim (DE)
(74) Vertreter: Führing, Dieter

(56) Entgegenhaltungen:
- EP-A- 0 791 489
- DE-A1- 4 121 737

## Beschreibung

Die Erfindung betrifft ein Ringelement mit einer Halteeinrichtung zur Halterung von den Reifen eines Rades, insbesondere eines Lastkraftwagen-oder Omnibus-Rades umgreifenden Kettenelementen, wobei das Ringelement einseitig offen ist und ein die Ringelement-Öffnung überbrückendes Spannorgan aufweist, das zum Aufweiten des Ringelementes vorgesehen ist, um das Ringelement an der Felge des Rades zu fixieren.

Ein derartiges Ringelement, bzw. eine Einrichtung zum Verhindern eines Durchrutschens oder Durchdrehens eines Fahrzeugrades mit einem solchen Ringelement ist aus der DE 41 21 737 C2 der Anmelderin bekannt. Das gattungsbildende Ringelement dieser bekannten Vorrichtung besitzt einen viereckigen, bzw. länglich rechteckigen Querschnitt. Es wird zweckmäßigerweise in der vorderseitigen, umlaufenden Rinne der Felge des Fahrzeugrades angeordnet und mit Hilfe des die Ringelement-Öffnung überbrückenden Spannorgans aufgeweitet und in der Felgen-Rinne befestigt. Es hat sich jedoch gezeigt, dass ein Verdrehen des Ringelementes mit der an ihm vorgesehenen Halteeinrichtung relativ zur Felge des Rades nicht zuverlässig ausgeschlossen werden kann, was als ein Mangel angesehen wird.

Deshalb liegt der Erfindung die Aufgabe zugrunde, ein Ringelement der eingangs genannten Art zu schaffen, das an einer Felge eines Rades eines Lastkraftwagens, eines Omnibusses o.dgl. zuverlässig fixierbar ist.

Diese Aufgabe wird erfindungsgemäß durch die Merkmale des Anspruches 1, gelöst.

Das erfindungsgemäße Ringelement ist vorzugsweise zur Anordnung in der vorderseitig umlaufenden Rinne der Felge vorgesehen, wobei sich durch die mindestens eine um das einseitig offene Ringelement umlaufende Fase eine Vergrößerung der Anlagefläche des Ringelementes an der Felgen-Rinne ergibt. Daraus resultiert eine zuverlässige Fixierung des Ringelementes in der Felgen-Rinne; ein ungewolltes bzw. unerwünschtes begrenztes Durchrutschen bzw. begrenztes Durchdrehen des Ringelementes in Bezug zur Rad-Felge wird mit konstruktiv einfachen Mitteln vermieden.

Als vorteilhaft hat es sich erwiesen, wenn die beiden Außenrandkanten des Ringelementes jeweils mit einer Fase ausgebildet sind, weil hierdurch die Anlagefläche zwischen dem Ringelement und der Felgen-Rinne entsprechend vergrößert wird, so dass eine optimale Fixierung des Ringelementes in der Felgen-Rinne möglich ist.

Damit sich das Ringelement beim Aufweiten der Ringelement-Öffnung mittels des die Ringelement-Öffnung überbrückenden Spannorganes entlang des gesamten Umfangs des einseitig offenen Ringelementes optimal in die Rinne der Rad-Felge hineinschmiegt, hat es sich als vorteilhaft erwiesen, wenn das Ringelement entlang seines Umfangs mit voneinander beabstandeten Entspannungsstellen ausgebildet ist. Bspw. ist das Ringelement mit drei solchen Entspannungsstellen ausgebildet. Die Entspannungsstellen sind vorzugsweise von in Achsrichtung des Ringelementes orientierten kleinen Durchgangslöchern gebildet.

Um ein Ringelement mit einer ausgezeichneten Standzeit, d.h. Einsatz- und Benutzungsdauer, zu verwirklichen, besteht das Ringelement vorzugsweise aus Edelstahl.

Bei dem erfindungsgemäßen Ringelement ist an seinen die Ringelement-Öffnung begrenzenden beiden Endabschnitten jeweils ein Hülsenelement befestigt, und das Spannorgan ist vorzugsweise von einem Gewindebolzen gebildet, der mit seinem einen Endabschnitt an dem einen Hülsenelement begrenzt verschwenkbar angebracht ist, und der sich mit seinem gegenüberliegenden zweiten Endabschnitt durch ein Durchgangsloch des anderen Hülsenelementes mit Spiel hindurch erstreckt. Durch eine solche Ausbildung ist es in vorteilhafter Weise optimal möglich, das Ringelement mit Hilfe des Spannorganes aufzuweiten, um das Ringelement in einer Rad-Felge bzw. in der vorderseitig umlaufenden Rinne der Rad-Felge zuverlässig zu fixieren.

Bei der Ausbildung der zuletzt genannten Art hat es sich als vorteilhaft erwiesen, wenn das erste Hülsenelement mit einem Sackloch mit einem halbkreisförmig konkaven Boden und der Gewindebolzen am zugehörigen ersten Endabschnitt mit einem daran angepaßten teilkreisförmig konvexen Bolzenkopf ausgebildet ist, wobei der erste Endabschnitt des Gewindebolzens mittels eines Stiftes, der sich durch den Krümmungsmittelpunkt des halbkreisförmig konkaven Hülsen-Bodens, in Achsrichtung des Ringelementes orientiert, durch das erste Hülsenelement hindurch erstreckt, mit dem ersten Hülsenelement begrenzt verschwenkbar verbunden ist.

Bei dem erfindungsgemäßen Ringelement ist auf den Gewindebolzen des Spannorganes vorzugsweise eine Schraubmutter aufgeschraubt, die gegen das erste Hülsenelement schraubbar bzw. geschraubt ist. Desgleichen hat es sich als zweckmäßig erwiesen, wenn auf den Gewindebolzen eine Aufweit-Schraubmutter aufgeschraubt ist, die gegen das zweite Hülsenelement schraubbar bzw. geschraubt ist. Durch Drehen der Aufweit-Schraubmutter auf dem Gewindebolzen gegen das zweite Hülsenelement kann das einseitig offene Ringelement wunschgemäß aufgeweitet werden, um es in einer Felgen-Rinne festzulegen, oder das Ringelement in seinem Durchmesser auch wieder zu reduzieren, um das Ringelement mit der an ihm vorgesehenen Halteeinrichtung für Kettenelemente von der Felge des Rades des Fahrzeugs wieder zu entfernen.

Um das erfindungsgemäße Ringelement in der Rinne einer Felge sicher zu befestigen und festzuhalten, ist es zweckmäßig, wenn auf den Gewindebolzen eine Kontermutter aufgeschraubt ist, die gegen die Aufweit-Schraubmutter zwängbar ist, wobei die Kontermutter in bekannter Weise ein Losdrehen der Aufweit-Schraubmutter im Fixierzustand des Ringelementes an der Rad-Felge verhindert.

Weitere Einzelheiten, Merkmale und Vorteile ergeben sich aus der nachfolgenden Beschreibung eines in der Zeichnung abschnittweise dargestellten Ausführungsbeispieles des erfindungsgemäßen Ringelementes bzw. des Ringelementes mit der zugehörigen Halteeinrichtung gemeinsam mit einem Rad eines Fahrzeuges, insbesondere eines Lastkraftwagens oder eines Omnibusses.

Es zeigen:
Fig.1 einen Schnitt durch ein abschnittweise gezeichnetes Rad eines Fahrzeuges und durch ein am Rad befestigtes Ringelement mit der Halteeinrichtung für Kettenelemente,
Fig.2 einen Abschnitt des Ringelementes gemäß Fig.1 in einer Vorderansicht,
Fig.3 die beiden die Ringelement-Öffnung begrenzenden Endabschnitte des Ringelementes mit den zugehörigen Hülsenelementen und dem die Ringelement-Öffnung überbrückenden Spannorgan, und
Fig.4 einen Schnitt entlang der Schnittlinie IV-IV in Fig.3 durch das Ringelement.

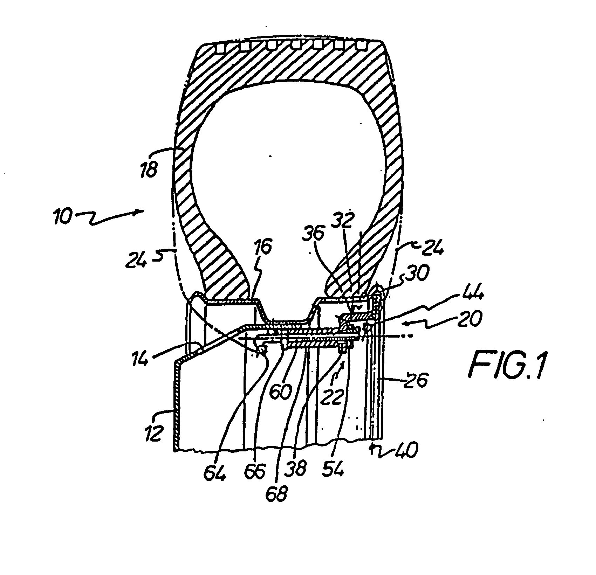

Fig.1 zeigt abgeschnitten ein Fahrzeugrad 10 mit einer Felge 12, die in Umfangsrichtung gleichmäßig verteilt mit Löchern 14 ausgebildet ist. Die Felge 12 weist ein Felgenbett 16 auf, in welchem ein Reifen 18 angeordnet ist.

Am Fahrzeugrad 10 ist eine Vorrichtung 20 temporär angebracht, die dazu dient, ein Durchrutschen bzw. Durchdrehen des Fahrzeugrades 10, bei dem es sich insbesondere um ein Rad eines Lastkraftwagens oder eines Omnibusses handelt, bspw. auf einem eisglatten oder mit Schnee bedeckten Untergrund zu verhindern. Zu diesem Zwecke weist die Vorrichtung 20 eine Halteeinrichtung 22 für Kettenelemente 24 auf, die den Reifen 18 umschließen. Eines der Kettenelemente 24 ist in Fig.1 durch eine dünne strichpunktierte Linie angedeutet.

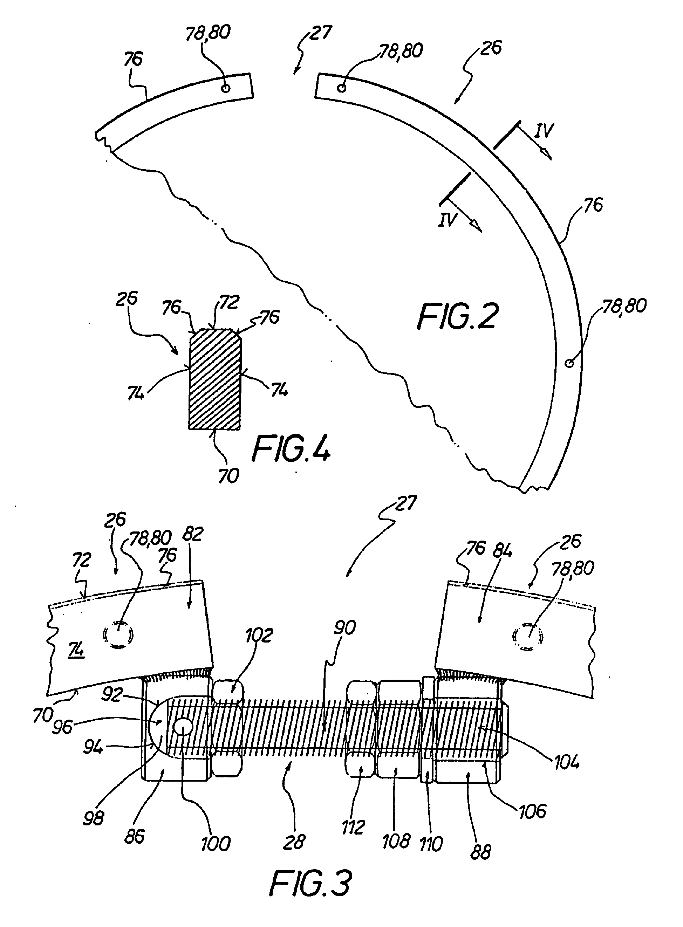

Die Halteeinrichtung 22 weist ein einseitig offenes Ringelement 26 auf. In Fig.2 ist ein Abschnitt des Ringelementes 26 in einer Vorderansicht gezeichnet. Das Ringelement 26 weist eine Öffnung 27 auf, die von einem Spannorgan 28 (siehe Fig.3) überbrückt ist. Mit Hilfe des Spannorganes 28 ist das einseitig offene Ringelement 26 wunschgemäß aufweitbar, d.h. in seinem Durchmesser vergrößerbar, und in einer vorderseitigen Rinne 30 einer Felge 12 fixierbar.

Vom Ringelement 26 stehen in Umfangsrichtung gleichmäßig verteilt Winkelelemente 32 weg, die in das Innere der Felge 12 weisen. Jedes Winkelelement 32 weist einen ersten Schenkel 36 und einen zweiten Schenkel 38 auf. Der erste Schenkel 36 ist am Ringelement 26 festgeschweißt. Der zweite Schenkel 38 ist zu der vom Ringelement 26 aufgespannten Ebene, die in Fig.1 durch eine dünne strichpunktierte Linie 40 angedeutet ist, mindestens annähernd parallel orientiert.

An den beiden voneinander abgewandten Seitenrändern des ersten Schenkels 36 des Winkelelementes 32 ist je ein feststehendes erstes Hakenelement 44 festgeschweißt. Der zweite Schenkel 38 des jeweiligen Winkelelementes 32 ist mit einem Durchgangsloch ausgebildet, in das sich eine Schraubmutter 54 hinein erstreckt. Durch die Schraubmutter 54 ist eine Gewindespindel 60 mit ihrem Außengewindeabschnitt durchgeschraubt. Die Gewindespindel 60 ist mit einem zweiten Hakenelement 64 ausgebildet. An der Gewindespindel 60 ist dem zweiten Hakenelement 64 zugeordnet ein Widerlagerorgan 66 vorgesehen. Das Widerlagerorgan 66 ist mit der Gewindespindel 60 verschweißt.

Ein Federelement 68 umgibt die Gewindespindel 60. Das Federelement 68 ist zwischen dem Widerlagerorgan 66 der Gewindespindel 60 und dem zweiten Schenkel 38 des Winkelelementes 32 eingespannt. Bei dem Federelement 68 handelt es sich bspw. um eine Hülse aus einem elastisch nachgiebigen Material.

In Fig.1 ist eine Halteeinrichtung 22 gezeichnet, bei welcher das jeweilige Winkelelement 32 mit einer Gewindespindel 60 kombiniert ist. Die Halteeinrichtung kann jedoch auch an Stelle von Winkelelementen und zugehörigen Gewindespindeln bspw. auch Schnellspanneinrichtungen aufweisen.

Wie aus Fig.4 ersichtlich ist, besitzt das Ringelement 26 einen viereckigen, d.h. länglich rechteckigen Querschnitt mit einer Ringinnenfläche 70, einer Ringaußenfläche 72 und zwei sich gegenüberliegenden Ringseitenflächen 74. Die beiden Randkanten zwischen den Ringseitenflächen 74 und der Ringaußenfläche 72 sind jeweils mit einer um das einseitig offene Ringelement 26 umlaufenden Fase 76 ausgebildet. Durch die beiden Fasen 76 ergibt sich eine Vergrößerung der Anlagefläche zwischen dem Ringelement 26 und der Rinne 30 der Felge 12, woraus eine zuverlässige Fixierung des Ringelementes 26 in der Rinne 30 resultiert, wenn das Ringelement 26 mit Hilfe des Spannorganes 28 (siehe Fig.3) entsprechend aufgeweitet wird.

Damit sich das Ringelement 26 optimal in die Rinne 30 der Felge 12 hineinschmiegt, ist das Ringelement 26 entlang seines Umfangs mit voneinander beabstandeten Entspannungsstellen 78 ausgebildet. Die Entspannungsstellen 78 sind von Durchgangslöchern 80 gebildet, die im Vergleich zur radialen Abmessung des Ringelementes 26 kleine lichte Querschnittsabmessungen besitzen. Die kleinen Durchgangslöcher 80 sind in Achsrichtung des Ringelementes, d.h. in den Figuren 2 und 3 zur Zeichnungsebene senkrecht orientiert.

Die Ringelement-Öffnung 27 ist durch Endabschnitte 82, 84 des Ringelementes 26 begrenzt. Am Endabschnitt 82 ist ein erstes Hülsenelement 86 und am Endabschnitt 84 des Ringelementes 26 ist ein zweites Hülsenelement 88 festgeschweißt. Die Hülsenelemente 86 und 88 sind an den Endabschnitten 82, 84 derartig befestigt, dass sie miteinander axial fluchten.

Das die Ringelement-Öffnung 27 überbrückende Spannorgan 28 weist einen Gewindebolzen 90 auf.

Das erste Hülsenelement 86 ist mit einem Sackloch 92 ausgebildet, das einen halbkreisförmigen, konkaven Boden 94 aufweist. Der Gewindebolzen 90 ist an seinem zugehörigen ersten Endabschnitt 96 mit einem an den halbkreisförmig konkaven Boden 94 angepaßten teilkreisförmig konvexen Bolzenkopf 98 ausgebildet. Der erste Endabschnitt 96 des Gewindebolzens 90 ist mittels eines Stiftes 100 mit dem ersten Hülsenelement 86 verbunden. Der Stift 100 erstreckt sich durch den Krümmungsmittelpunkt des halbkreisförmig konkaven Bodens 94 des Sackloches 92 des ersten Hülsenelementes 96 hindurch. Auf den Gewindebolzen 90 ist eine Schraubmutter 102 aufgeschraubt, die gegen das erste Hülsenelement 86 geschraubt ist.

Der Gewindebolzen 90 erstreckt sich mit seinem zweiten Endabschnitt 104 durch ein Durchgangsloch 106 des zweiten Hülsenelementes 88 mit Spiel hindurch. Auf den Gewindebolzen 90 ist eine Aufweit-Schraubmutter 108 aufgeschraubt, die - zum Aufweiten des einseitig offenen Ringelementes 26 - gegen das zweite Hülsenelement 88 schraubbar ist. Zwischen dem zweiten Hülsenelement 88 und der Aufweit-Schraubmutter 108 ist ein Distanzring 110 angeordnet. Eine Kontermutter 112 dient in an sich bekannter Weise zur Fixierung der Aufweit-Schraubmutter 108 in Bezug zum Gewindebolzen 90 im wunschgemäß aufgeweiteten Zustand des Ringelementes 26.

Das Ringelement 26 und die Hülsenelemente 86 und 88 bestehen vorzugsweise aus Edelstahl. Auch der Gewindebolzen 90 und die Muttern 102, 108 und 112 sowie der Distanzring 110 bestehen vorzugsweise aus Edelstahl, so dass sich eine ausgezeichnete Lebensdauer ergibt.

### Bezugsziffernliste:

- 10: Fahrzeugrad
- 12: Felge (von 10)
- 14: Löcher (in 12)
- 16: Felgenbett (von 12 für 18)
- 18: Reifen (von 10)
- 20: Vorrichtung (für 10)
- 22: Halteeinrichtung (von 20 für 24)
- 24: Kettenelemente (für 10)
- 26: einseitig offenes Ringelement (von 22)
- 27: Öffnung (von 26)
- 28: Spannorgan (für 26 bei 27)
- 30: Felgenrinne (von 16)
- 32: Winkelelement (an 26)
- 36: erster Schenkel (von 32 an 26)
- 38: zweiter Schenkel (von 32 für 54)
- 40: Ebene (von 26)
- 44: erste Hakenelemente (an 32)
- 54: Schraubmutter (an 38 für 60)
- 60: Gewindespindel (von 22)
- 64: zweites Hakenelement (an 60)
- 66: Widerlagerorgan (an 60 für 68)
- 68: Federelement (an 60 zwischen 66 und 38)
- 70: Ringinnenfläche (von 26)
- 72: Ringaußenfläche (von 26)
- 74: Ringseitenflächen (von 26)
- 76: umlaufende Fase (von 26 zwischen 74 und 76)
- 78: Entspannungsstellen (in 26)
- 80: Durchgangslöcher (für 78)
- 82: Endabschnitt (von 26)
- 84: Endabschnitt (von 26)
- 86: erstes Hülsenelement (an 82)
- 88: zweites Hülsenelement (an 84)
- 90: Gewindebolzen (von 28 zwischen 86 und 88)
- 92: Sackloch (in 86)
- 94: halbkreisförmig konkaver Boden (von 92 für 98)
- 96: erster Endabschnitt (von 90)
- 98: Bolzenkopf (von 90 an 96)
- 100: Stift (zwischen 90 und 86)
- 102: Schraubmutter (an 90 bei 86)
- 104: zweiter Endabschnitt (von 90)
- 106: Durchgangsloch (in 88 für 104)
- 108: Aufweit-Schraubmutter (an 90 bei 88)
- 110: Distanzring (zwischen 88 und 108)
- 112: Kontermutter (an 90 für 108)

## Patentansprüche

1. Ringelement (26) mit einer Halteeinrichtung (22) zur Halterung von den Reifen (18) eines Rades (10), insbesondere eines Lastkraftwagen- oder Omnibus-Rades (10) umgreifenden Kettenelementen (24), wobei das einen viereckigen Querschnitt besitzende Ringelement (26) einseitig offen ist und ein die Ringelement-Öffnung (27) überbrückendes Spannorgan (28) aufweist, das zum Aufweiten des Ringelementes (26) vorgesehen ist, um das Ringelement (26) an der Felge (12), insbesondere in der vorderseitigen Rinne (30) der Felge (12) des Rades (10) zu fixieren,
**dadurch gekennzeichnet,**
**dass** das Ringelement (26) an mindestens einer seiner beiden Außenrandkanten der der Felge (12) zugewandten Ringaußenfläche (72) mit einer um das Ringelement (26) umlaufenden Fase (76) ausgebildet ist, dass das Ringelement (26) entlang seines Umfangs mit voneinander beabstandeten Entspannungsstellen (78) ausgebildet ist, dass an den die Ringelement-Öffnung (27) begrenzenden Endabschnitten (82, 84) des Ringelementes (26) jeweils ein Hülsenelement (86, 88) befestigt ist, und dass das Spannorgan (28) einen Gewindebolzen (90) aufweist, der mit seinem einen Endabschnitt (96) an dem ersten Hülsenelement (86) verschwenkbar angebracht ist und der sich mit seinem davon entfernten zweiten Endabschnitt (104) durch ein Durchgangsloch (106) des zweiten Hülsenelementes (88) mit Spiel hindurcherstreckt.

2. Ringelement (26) nach Anspruch 1,
**dadurch gekennzeichnet,**
**dass** die beiden Außenrandkanten des Ringelementes (26) jeweils mit einer Fase (76) ausgebildet sind.

3. Ringelement (26) nach Anspruch 1,
**dadurch gekennzeichnet,**
**dass** die Entspannungsstellen (78) von in Achsrichtung des Ringelementes (26) orientierten Durchgangslöchern (80) gebildet sind.

4. Ringelement (26) nach einem der Ansprüche 1 bis 3,
**dadurch gekennzeichnet,**
**dass** das Ringelement (26) aus Edelstahl besteht.

5. Ringelement (26) nach Anspruch 1,
**dadurch gekennzeichnet,**
**dass** das erste Hülsenelement (86) mit einem Sackloch (92) mit einem halbkreisförmig konkaven Boden (94) und der Gewindebolzen (90) am zugehörigen ersten Endabschnitt (96) mit einem daran angepaßten teilkreisförmig konvexen Bolzenkopf (98) ausgebildet ist, wobei der erste Endabschnitt (96) des Gewindebolzens (90) mittels eines Stiftes (100), der sich durch den Krümmungsmittelpunkt des halbkreisförmig konkaven Bodens (94) des ersten Hülsenelementes (86), in Achsrichtung des Ringelementes(26) orientiert, hindurch erstreckt, mit dem ersten Hülsenelement (86) verschwenkbar verbunden ist.

6. Ringelement (26) nach Anspruch 5,
**dadurch gekennzeichnet,**
**dass** auf den Gewindebolzen (90) eine Schraubmutter (102) aufgeschraubt ist, die gegen das erste Hülsenelement (86) schraubbar oder geschraubt ist.

7. Ringelement (26) nach einem der Ansprüche 1 bis 6,
**dadurch gekennzeichnet,**
**dass** auf den Gewindebolzen (90) eine Aufweit-Schraubmutter (108) aufgeschraubt ist, die gegen das zweite Hülsenelement (88) schraubbar oder geschraubt ist.

8. Ringelement (26) nach Anspruch 7,
**dadurch gekennzeichnet,**
**dass** auf den Gewindebolzen (90) eine Kontermutter (112) aufgeschraubt ist, die der Aufweit-Schraubmutter (108) zugeordnet ist.

## Claims

1. Ring element (28) with a holding device (22) for holding chain elements (24) which engage around the tyre (18) of a wheel (10), in particular of a truck wheel or bus wheel (10), wherein the ring element (26) which has a quadrilateral cross section is open on one side and has a clamping element (28) which spans the opening (27) in the ring element and is provided for expanding the ring element (26) in order to secure the ring element (26) to the rim (12), in particular in the front-side channel (30) in the rim (12) of the wheel (10),
**characterized**
**in that** the ring element (26) is embodied, on at least one of its two outer edges of the ring outer surface (72) facing the rim (12), with a chamfer (78) which runs around the ring element (26), in that the ring element (26) is embodied along its circumference with tension-relief points (78) which are spaced apart from one another, in that a sleeve element (86, 88) is attached to each of the end sections (82, 84), bounding the opening (27) in the ring element, of the ring element (26), and in that the clamping element (28) has a threaded bolt (90) which can be pivotably attached with one (96) of its end sections to the first sleeve element (86), and which extends with play, with its second end section (104) spaced apart from the latter, through a passage hole (106) in the second sleeve element (88).

2. Ring element (26) according to Claim 1,
**characterized**
**in that** the two outer edges of the ring element (26) are each embodied with a chamfer (76).

3. Ring element (26) according to Claim 1,
**characterized**
**in that** the tension-relief points (78) are formed by passage holes (80) which are oriented in the axial direction of the ring element (26).

4. Ring element (26) according to one of Claims 1 to 3,
**characterized**
**in that** the ring element (26) is composed of stainless steel.

5. Ring element (26) according to Claim 1,
**characterized**
**in that** the first sleeve element (86) is embodied with a blind hole (92) with a concave floor (94) in the form of a semicircle, and the threaded bolt (90) is embodied on the associated first end section (96) with a convex bolt head (98) in the form of a pitch circle adapted to said first end section (96), wherein the first end section (96) of the threaded bolt (90) is pivotably connected to the first sleeve element (86) by means of a pin (100) which extends through the curvature centre point of the floor (94), which is concave and in the form of a semicircle, of the first sleeve element (86), oriented in the axial direction of the ring element (26).

6. Ring element (26) according to Claim 5,
**characterized**
**in that** a screw nut (102), which can be screwed or is screwed against the first sleeve element (86), is screwed onto the threaded bolt (90).

7. Ring element (26) according to one of Claims 1 to 6,
**characterized**
**in that** an expanding screw nut (108), which can be screwed or is screwed against the second sleeve element (88), is screwed onto the threaded bolt (90).

8. Ring element (26) according to Claim 7,
**characterized**
**in that** a lock nut (112), which is assigned to the expanding screw nut (108), is screwed onto the threaded bolt (90).

## Revendications

1. Elément annulaire (26) doté d'un dispositif de retenue (22) pour retenir des éléments de chaîne (24) venant en prise autour du pneu (18) d'une roue (10), notamment d'une roue de véhicule poids lourd ou d'omnibus (10), l'élément annulaire (26) possédant une section transversale carrée étant ouvert d'un côté et présentant un organe de serrage (28) surmontant l'ouverture (27) de l'élément annulaire, qui est prévu pour écarter l'élément annulaire (26), afin de fixer l'élément annulaire (26) sur la jante (12), en particulier dans la rainure (30) du côté avant de la jante (12) de la roue (10),
**caractérisé en ce que**
l'élément annulaire (26) est réalisé sur au moins l'une de ses deux arêtes de bord extérieures de la surface extérieure annulaire (72) tournée vers la jante (12) avec un chanfrein périphérique (76) autour de l'élément annulaire (26), **en ce que** l'élément annulaire (26) est réalisé le long de sa périphérie avec des points de détente (78) espacés les uns des autres, **en ce qu'**un élément de douille (86, 88) respectif est fixé sur les portions d'extrémité (82, 84) de l'élément annulaire (26) limitant l'ouverture (27) de l'élément annulaire, et **en ce que** l'organe de serrage (28) présente un boulon fileté (90) qui est monté avec l'une de ses portions d'extrémité (96) de manière pivotante sur le premier élément de douille (86), et qui s'étend avec jeu avec sa deuxième portion d'extrémité (104) éloignée de celui-ci, à travers un trou traversant (106) du deuxième élément de douille (88).

2. Elément annulaire (26) selon la revendication 1,
**caractérisé en ce que**
les deux arêtes de bord extérieures de l'élément annulaire (26) sont réalisées à chaque fois avec un chanfrein (76).

3. Elément annulaire (26) selon la revendication 1,
**caractérisé en ce que**
les points de détente (78) sont formés par des trous traversants (80) orientés dans la direction axiale de l'élément annulaire (26).

4. Elément annulaire (26) selon l'une quelconque des revendications 1 à 3,
**caractérisé en ce que**
l'élément annulaire (26) se compose d'acier noble.

5. Elément annulaire (26) selon la revendication 1,
**caractérisé en ce que**
le premier élément de douille (86) est réalisé avec un trou borgne (92) avec un fond (94) concave de forme semi-circulaire et le boulon fileté (90) sur la première portion d'extrémité associée (96) est réalisé avec une tête de boulon (98) convexe de forme semi-circulaire adaptée, la première portion d'extrémité (96) du boulon fileté (90) étant connectée de manière pivotante au premier élément de douille (86) au moyen d'une goupille (100) orientée dans la direction axiale de l'élément annulaire (26), qui s'étend à travers le centre de courbure du fond (94) concave de forme semi-circulaire du premier élément de douille (86).

6. Elément annulaire (26) selon la revendication 5,
**caractérisé en ce**
**qu'**un écrou fileté (102) est vissé sur le boulon fileté (90), lequel peut être ou est vissé contre le premier élément de douille (86).

7. Elément annulaire (26) selon l'une quelconque des revendications 1 à 6,
**caractérisé en ce que**
l'on visse sur le boulon fileté (90) un écrou fileté d'écartement (108), qui peut être ou est vissé contre le deuxième élément de douille (88).

8. Elément annulaire (26) selon la revendication 7,
**caractérisé en ce que**
l'on visse sur le boulon fileté (90) un contre-écrou (112), qui est associé à l'écrou fileté d'écartement (108).
